# EUROPÄISCHE PATENTANMELDUNG

(11) **EP 3 854 763 A1**
(43) Veröffentlichungstag der Anmeldung: **28.07.2021**
(21) Anmeldenummer: 20153474.0
(22) Anmeldetag: 23.01.2020
(51) Int. Cl.: C04B 28/04, C04B 28/06, C04B 28/10, C04B 28/14, C04B 28/16, C04B 40/00, C04B 103/40

(54) **VERFAHREN ZUR HERSTELLUNG VON DISPERGIERMITTELN IN FESTER FORM UND DEREN VERWENDUNG IN MINERALISCHEN BINDEMITTELZUSAMMENSETZUNGEN**

(71) Anmelder: SIKA TECHNOLOGY AG, 6340 Baar (CH)
(72) Erfinder: Muths-Kern, Denise, 8047 Zürich (CH); Sahinagic, Rasid, 6423 Seewen (CH); Hampel, Christina, 5406 Rütihof (CH); Jagielski, Nicole, 8003 Zürich (CH); Zimmermann, Jörg, 8400 Winterthur (CH)
(74) Vertreter: Sika Patent Attorneys

(57) **Zusammenfassung**

Die vorliegende Erfindung bezieht sich auf ein Verfahren zur Herstellung von pulverförmigen Dispergiermitteln umfassend mindestens 90 Gew.-% mindestens eines Copolymeren CP vom Typ Polycarboxylatether. Die pulverförmigen Dispergiermittel können in Wasser einfach dispergiert werden. Die vorliegende Erfindung bezieht sich auch auf die Verwendung solcher pulverförmigen Dispergiermittel in mineralischen Bindemittelzusammensetzungen, insbesondere Trockenmörteln, Beton oder Gipsformulierungen.

## Beschreibung

### Technisches Gebiet

Die vorliegende Erfindung bezieht sich auf ein Verfahren zur Herstellung von pulverförmigen Dispergiermitteln umfassend jeweils mindestens ein Copolymer CP vom Typ Polycarboxylatether. Die pulverförmigen Dispergiermittel können in Wasser einfach dispergiert werden. Die vorliegende Erfindung bezieht sich auch auf die Verwendung solcher pulverförmigen Dispergiermittel in mineralischen Bindemittelzusammensetzungen.

### Hintergrund

Copolymere aus Polycarboxylaten und Polyalkylenglykolen, sogenannte Polycarboxylatether (PCE) sind seit vielen Jahren als Dispergiermittel für wässrige Dispersionen bekannt, insbesondere für wässrige Dispersionen von mineralischen Bindemitteln. PCE wirken als Fließmittel und reduzieren das Wasser, das benötigt wird, um eine bestimmte Fließfähigkeit einer bestimmten ungehärteten mineralischen Bindemittelzusammensetzung zu erreichen. Eine Reduzierung des Wassergehalts in mineralischen Bindemittelzusammensetzungen, insbesondere in zementösen Zusammensetzungen, ist wünschenswert, da sie zu einer geringeren Trennung der festen Bestandteile in der ungehärteten Zusammensetzung und zu einer erhöhten Druckfestigkeit der ausgehärteten Zusammensetzung führt.

PCE werden typischerweise in wässriger Lösung hergestellt oder fallen als wässrige Polymerlösungen an. Der Nachteil dieser wässrigen Lösungen sind hohe Transportkosten, da ein hoher Anteil Lösungsmittel mittransportiert werden muss. Ausserdem sind wässrige Lösungen frostempfindlich, das heisst, sie können einerseits gefrieren, andererseits kann es unter kühlen Lagerbedingungen zur Auskristallisation von Feststoff kommen. Dies erfordert spezielle Lagerbedingungen. Ein Vorliegen der PCE in fester Form, z.B. in Form eines Pulvers kann diese Nachteile überwinden. Für verschiedene Anwendungen ist es zudem wünschenswert, wenn PCE als Pulver vorliegen. So ist beispielsweise die Herstellung von Trockenmörteln mit pulverförmigen PCE deutlich vereinfacht.

WO 2003/080714 (Sika Schweiz) beschreibt die Herstellung von festen Polymeren vom Polycarboxylatether-Typ durch Zerkleinerung einer abgekühlten Polymerschmelze. Nachteilig an den erhaltenen Polymerpulvern ist, dass sie einen eher niedrigen Schmelzpunkt, bzw. Erweichungspunkt, aufweisen, so dass bei erhöhten Temperaturen, beispielsweise während der Lagerung oder dem Transport, unerwünschte Schmelz-, bzw. Erweichungsprozesse und beispielsweise Verbackungen auftreten können.

CN 101824125 (Jiangsu Dingda) beschreibt ein Verfahren, in dem PCE mittels Sprühtrocknung in die Pulverform überführt werden. Nachteilig an einem Sprühtrocknungsverfahren ist aber die hohe Temperaturbelastung der Polymere während der Trocknung, was zu unerwünschten Abbaureaktionen führen kann. Ausserdem ist auch das Risiko einer Staubexplosion im Sprühturm gegeben, was zu einem erhöhten Aufwand an Sicherheitsmassnahmen im herstellenden Betrieb führt.

WO 2006/129883 (Nippon Shokubai) offenbart ein pulverförmiges Dispergiermittel auf Basis Polycarboxylatether, welches beispielsweise in einer Filmtrocknungsmethode hergestellt werden kann. Polycarboxylatether dürfen zu höchstens 50% neutralisiert werden. Höhere Neutralisierungsgrade der Polymere werden beschrieben als nachteilig hinsichtlich der Löslichkeit der PCE in Wasser sowie des Einflusses der PCE auf die Verarbeitbarkeit mineralischer Bindemittelzusammensetzungen.

Es besteht daher ein Bedarf an Verfahren, mit welchen sich polymere Dispergiermittel auf Basis von Polycarboxylatethern in feste Pulver umwandeln lassen und welche die oben beschriebenen Nachteile überwinden.

### Zusammenfassung der Erfindung

Aufgabe der vorliegenden Erfindung ist es, ein verbessertes Verfahren zur Verfügung zu stellen, mit welchem sich Dispergiermittel in fester Form erhalten lassen, wobei die Dispergiermittel Copolymere auf Basis von Polycarboxylatethern und/oder - estern umfassen oder daraus bestehen. Insbesondere sollen die Copolymere in fester Form einen besonders hohen Schmelzpunkt, bzw. Erweichungspunkt, aufweisen, um Schwierigkeiten bei Lagerung und Transport zu vermeiden.

Überraschenderweise wurde gefunden, dass ein Verfahren gemäss Anspruch 1 diese Aufgabe löst.

Gegenstand der vorliegenden Erfindung ist demnach ein Verfahren zur Herstellung eines Dispergiermittels in fester Form, wobei das Dispergiermittel mindestens 90 Gew.-%, bevorzugt mindestens 95 Gew.-%, insbesondere mindestens 98.5 Gew.-% eines Copolymers **CP** umfasst, welches
(i) Wiederholungseinheiten **A** der allgemeinen Struktur (I), 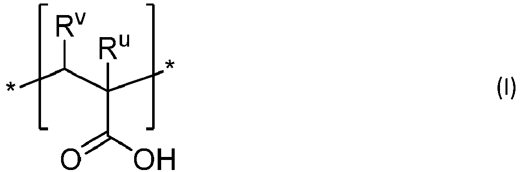 und
(ii) Wiederholungseinheiten **B** der allgemeinen Struktur (II), 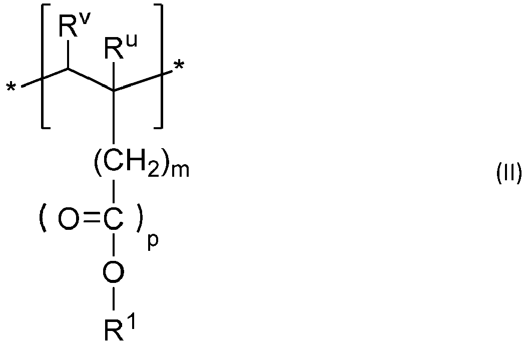 umfasst, wobei
   jedes R^{u} unabhängig voneinander Wasserstoff oder eine Methylgruppe darstellt,
   jedes R^{v} unabhängig voneinander Wasserstoff oder COOM darstellt, wobei M unabhängig voneinander H, ein Alkalimetall, oder ein Erdalkalimetall ist,
   m = 0, 1, 2 oder 3 ist,
   p = 0 oder 1 ist,
   jedes R¹ unabhängig voneinander -[YO]ₙ-R⁴ darstellt, wobei Y ein C2- bis C4-Alkylen und R⁴ ein H, C1- bis C20-Alkyl, -Cyclohexyl oder -Alkylaryl darstellt, und n = 2 - 350 ist, und
   die Wiederholungseinheiten **A** und **B** im Copolymer **CP** ein molares Verhältnis von **A : B** im Bereich von 10 : 90 - 90 :10 aufweisen,
   dadurch gekennzeichnet, dass das Verfahren die folgenden Schritte umfasst oder daraus besteht:
      a) Herstellung einer Mischung aus mindestens einem Copolymeren **CP,** mindestens einer Base und Wasser, wobei das Molverhältnis von Base zu Copolymer **CP** so gewählt ist, dass ein Neutralisationsgrad von mindestens 55%, bevorzugt mindestens 75%, mehr bevorzugt mindestens 95%, besonders bevorzugt mindestens 100%, insbesondere mindestens 110% resultiert,
      b) optional Trocknung der neutralisierten wässrigen Zubereitung aus Schritt a), und
      c) optional Zerkleinerung des in Schritt b) erhaltenen Materials.

Es wurde gefunden, dass durch eine Neutralisation von Copolymeren **CP** in einem erfindungsgemässen Verfahren Dispergiermittel in fester Form und mit einem Schmelzpunkt, bzw. Erweichungspunkt, von > 50°C, bevorzugt von > 100°C, besonders bevorzugt von > 180°C, insbesondere von > 220°C erhalten werden. Feste Polymere mit so hohen Schmelzpunkten, bzw. Erweichungspunkten, haben den Vorteil, dass sie bei Lagerung und Transport nicht mehr schmelzen und damit zu weniger Verbackungen führen.

Es wurde weiterhin gefunden, dass die verflüssigende Wirkung der Copolymere **CP** bei niedrigem Neutralisationsgrad zunächst abnimmt und erst bei höheren Neutralisationsgraden wieder zunimmt. Dies bedeutet, dass beispielsweise eine Gipsmischung, welche ein neutralisiertes Copolymer **CP** enthält, erst ab einem Neutralisationsgrad des Copolymeren **CP** von > 100% dasselbe Fliessverhalten zeigt, wie dieselbe Gipsmischung, die dasselbe Copolymere **CP** in nicht-neutralisierter Form enthält. Eine hohe verflüssigende Wirkung ist wünschenswert.

Schliesslich wurde gefunden, dass ein Copolymer **CP** mit einem höheren Neutralisationsgrad eine stärkere verzögernde Wirkung auf die Versteifung von Gipsmischungen hat, als dasselbe Copolymer **CP** mit einem niedrigen Neutralisationsgrad. Eine stärker verzögernde Wirkung kann vorteilhaft sein, um eine ausreichende Verarbeitungszeit von Gipsmischungen zu gewährleisten.

### Wege zur Ausführung der Erfindung

In einem ersten Aspekt bezieht sich die vorliegenden Erfindung auf ein Verfahren zur Herstellung eines Dispergiermittels in fester Form, wobei das Dispergiermittel mindestens 90 Gew.-%, bevorzugt mindestens 95 Gew.-%, insbesondere mindestens 98.5 Gew.-%, jeweils bezogen auf das gesamte Trockengewicht des Dispergiermittels, mindestens eines Copolymeren **CP** umfasst, wobei Copolymere **CP** folgende Bestandteile umfassen:
(i) Wiederholungseinheiten **A** der allgemeinen Struktur (I), 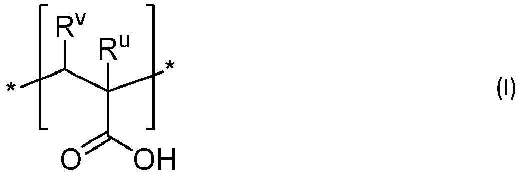 und
(ii) Wiederholungseinheiten **B** der allgemeinen Struktur (II), 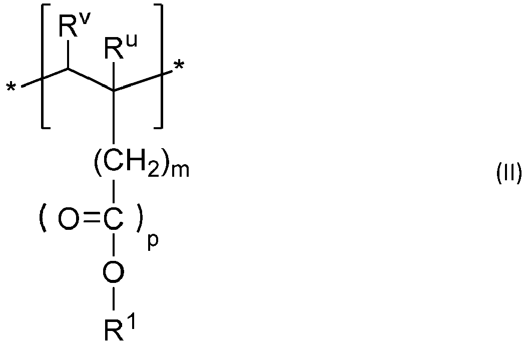 wobei
   jedes R^{u} unabhängig voneinander Wasserstoff oder eine Methylgruppe darstellt,
   jedes R^{v} unabhängig voneinander Wasserstoff oder COOM darstellt, wobei M unabhängig voneinander H, ein Alkalimetall, oder ein Erdalkalimetall ist,
   m = 0, 1, 2 oder 3 ist,
   p = 0 oder 1 ist,
   jedes R¹ unabhängig voneinander -[YO]ₙ-R⁴ darstellt, wobei Y ein C2- bis C4-Alkylen und R⁴ ein H, C1- bis C20-Alkyl, -Cyclohexyl oder -Alkylaryl darstellt, und n = 2 - 350 ist,
   und wobei die Wiederholungseinheiten **A** und **B** im Copolymer **CP** ein molares Verhältnis von **A : B** im Bereich von 10 : 90 - 90 :10 aufweisen,
   dadurch gekennzeichnet, dass das Verfahren die folgenden Schritte umfasst:
      a) Herstellung einer Mischung aus mindestens einem Copolymeren **CP,** mindestens einer Base und Wasser, wobei das Molverhältnis von Base zu Copolymer **CP** so gewählt ist, dass ein Neutralisationsgrad von mindestens 55%, bevorzugt mindestens 75%, mehr bevorzugt mindestens 95%, besonders bevorzugt mindestens 100%, insbesondere mindestens 110% resultiert,
      b) optional Trocknung der neutralisierten wässrigen Zubereitung aus Schritt a), und
      c) optional Zerkleinerung des in Schritt b) erhaltenen Materials.

Ein Dispergiermittel im Rahmen der vorliegenden Erfindung ist demnach ein Polymer oder eine Mischung aus Polymeren umfassend mindestens 90 Gew.-%, bevorzugt mindestens 95 Gew.-%, insbesondere mindestens 98.5 Gew.-% mindestens eines Copolymeren **CP** wie oben beschrieben. Ein Dispergiermittel ist somit insbesondere ein Polycarboxylatether oder Polycarboxylatester oder eine Mischung aus Polycarboxylatethern und/oder Polycarboxylatestern.

In einer bevorzugten Ausführungsform umfasst ein erfindungsgemässes Dispergiermittel genau ein Copolymer **CP.**

Dispergiermittel im Sinne der vorliegenden Erfindung werden bevorzugt in mineralischen Bindemittelzusammensetzungen eingesetzt. Die Dispergiermittel der vorliegenden Erfindung bewirken insbesondere eine Verringerung des Wasseranspruches mineralischer Bindemittelzusammensetzungen. Die bedeutet, dass zur Einstellung eines bestimmten Fliessverhaltens einer mineralische Bindemittelzusammensetzung weniger Wasser benötigt wird, wenn diese Zusammensetzung ein Dispergiermittel enthält, verglichen mit derselben Zusammensetzung ohne Dispergiermittel. Dies ist gleichbedeutend mit einer verflüssigenden Wirkung. Üblicherweise wird diese Eigenschaft gemessen durch eine Bestimmung des Ausbreitmasses z.B. nach Standard EN 12350-5.

Unter dem Begriff "Dispergiermittel in fester Form" wird im Rahmen der vorliegenden Erfindung ein Polymer oder eine Mischung aus Polymeren umfassend mindestens 90 Gew.-%, bevorzugt mindestens 95 Gew.-%, insbesondere mindestens 98.5 Gew.-% eines Copolymeren **CP** wie oben beschrieben, verstanden, welche bei 23°C und einem Druck von 1 bar in festem Aggregatzustand vorliegt. Dispergiermittel in fester Form können insbesondere in Form von Pulvern, Schuppen, Pellets oder Platten vorliegen. In einer besonders bevorzugten Ausführungsform wird das feste Dispergiermittel in einem erfindungsgemässen Verfahren als Pulver erhalten.

Das feste Dispergiermittel, insbesondere das pulverförmige Dispergiermittel, erhalten aus einem erfindungsgemässen Verfahren weist vorzugsweise eine Partikelgrößenverteilung mit einem D90-Wert von < 300 µm, vorzugsweise < 270 µm, insbesondere < 255 µm, einem D10-Wert von < 60 µm, vorzugsweise < 50 µm, insbesondere < 45 µm, und einem D50-Wert zwischen 70 - 130 µm, vorzugsweise 75 - 120 µm, insbesondere 80-110 µm auf.

Eine "Partikelgrößenverteilung" im Rahmen der vorliegenden Erfindung ist eine Verteilungsfunktion, die die relative Menge der vorhandenen Partikel deren Größe zuordnet. Die Partikelgrößenverteilung kann durch verschiedene D-Werte beschrieben werden. So entspricht beispielsweise der D10-Wert dem Durchmesser der Partikel, bei dem 10% aller Partikel einer bestimmten Verteilung kleiner sind und 90% aller Partikel einer bestimmten Verteilung größer sind. Der D90-Wert entspricht hingegen dem Durchmesser, bei dem 90% aller Partikel einer bestimmten Verteilung kleiner sind. Sofern nicht anders angegeben, bezieht sich der Begriff "Partikelgröße" für die vorliegenden Zwecke auf einen mittleren Wert der Partikelgrößenverteilung eines Feststoffs. Dieser mittlere Wert wird als D50-Wert einer gegebenen Partikelgrößenverteilung angegeben und stellt den Wert des Partikeldurchmessers dar, bei dem 50% aller Partikel einer bestimmten Verteilung kleiner sind und 50% aller Partikel einer bestimmten Verteilung größer sind. Der D50 Wert ist also ein Zahlenmedian. Vorzugsweise wird eine Partikelgröße von nicht-kugelförmigen oder unregelmäßigen Partikeln durch den äquivalenten kugelförmigen Durchmesser einer Kugel mit gleichem Volumen dargestellt.

Die Partikelgrößenverteilung und damit die unterschiedlichen D-Werte sowie die oben definierte Partikelgröße können durch Laserlichtstreuung, vorzugsweise nach der Norm ISO 13320:2009, bestimmt werden. Insbesondere ein Mastersizer 2000 Gerät mit einer Hydro 2000G Dispergiereinheit und der Mastersizer 2000 Software der Malvern Instruments GmbH (Deutschland) kann zu diesem Zweck eingesetzt werden.

Copolymere **CP** der vorliegenden Erfindung sind Polycarboxylatether und/oder Polycarboxylatester.

Copolymere **CP** der vorliegenden Erfindung umfassen
(i) Wiederholungseinheiten **A** der allgemeinen Struktur (I), 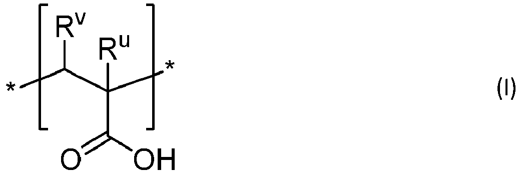 und
(ii) Wiederholungseinheiten B der allgemeinen Struktur (II), 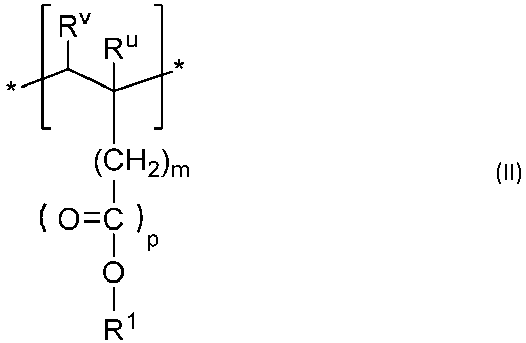 wobei
   jedes R^{u} unabhängig voneinander Wasserstoff oder eine Methylgruppe darstellt,
   jedes R^{v} unabhängig voneinander Wasserstoff oder COOM darstellt, wobei M unabhängig voneinander H, ein Alkalimetall, oder ein Erdalkalimetall ist,
   m = 0, 1, 2 oder 3 ist,
   p = 0 oder 1 ist,
   jedes R¹ unabhängig voneinander -[YO]ₙ-R⁴ darstellt, wobei Y ein C2- bis C4-Alkylen und R⁴ ein H, C1- bis C20-Alkyl, -Cyclohexyl oder -Alkylaryl darstellt, und n = 2 - 350 ist,
   und wobei die Wiederholungseinheiten **A** und **B** im Copolymer **CP** ein molares Verhältnis von **A : B** im Bereich von 10 : 90 - 90 :10 aufweisen.

In einer bevorzugten Ausführungsform beträgt n = 10 - 250, mehr bevorzugt 30 - 200, besonders bevorzugt 35 - 200, insbesondere 40 - 110.

In einer besonders bevorzugten Ausführungsform umfasst das Copolymer **CP** Wiederholungseinheiten **A** der allgemeinen Struktur (I) sowie Wiederholungseinheiten **B** der allgemeinen Struktur (II), wobei die molaren Verhältnisse von **A** zu **B** im Bereich von 20 : 80 - 80 : 20, mehr bevorzugt 30 : 70 - 80 : 20, insbesondere 35 : 65 - 75 : 25 liegen.

Ein Copolymer **CP** hat bevorzugt eine mittlere Molmasse M_{w} im Bereich von 1'000 - 1'000'000, besonders bevorzugt 1'500 - 500'000, ganz besonders bevorzugt 2'000 - 100'000, insbesondere 3'000 - 75'000 oder 3'000 - 50'000 g/mol. Die Molmasse M_{w} wird vorliegend durch Gel-Permeations-Chromatographie (GPC) mit Polyethylenglycol (PEG) als Standard bestimmt. Diese Technik ist dem Fachmann an sich bekannt.

Erfindungsgemässe Copolymere **CP** können statistische oder nicht-statistische Copolymere sein. Nicht-statistische Copolymere sind insbesondere alternierende Copolymere oder Block- oder Gradienten-Copolymere oder Mischungen davon.

Erfindungsgemässe Copolymere **CP,** welche statistische Copolymere sind, können durch freie radikalische Polymerisation von Mischungen umfassend mindestens ein olefinisch ungesättigtes Carbonsäure-Monomer der allgemeinen Struktur (la) 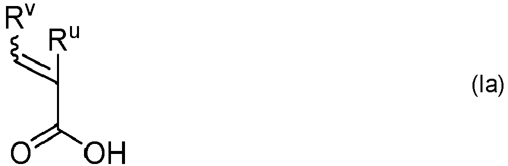 sowie mindestens ein olefinisch ungesättigtes Monomer der allgemeine Struktur (IIa) 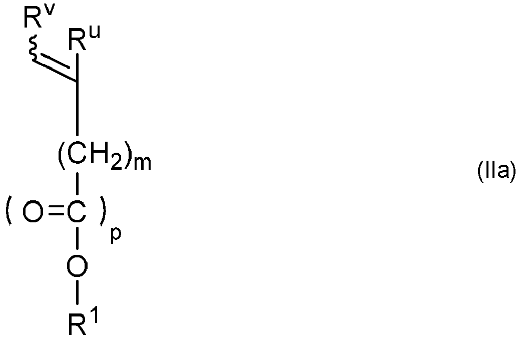 hergestellt werden,
wobei R^{u}, R^{v}, m, p, R¹ und n die oben angegebenen Bedeutungen haben und die geschlängelte Bindung sowohl für cis- als auch trans-Doppelbindungsisomere bzw. deren Mischung steht.

Geeignete Bedingungen zur Durchführung der freien radikalischen Polymerisation sind dem Fachmann an sich bekannt und beispielsweise beschreiben in EP 1 103 570 (Nippon Shokubai).

Erfindungsgemässe Copolymere **CP,** welche nicht-statistische Copolymere sind, insbesondere Block- oder Gradienten-Copolymere, können bevorzugt durch lebende freie radikalische Polymerisation hergestellt werden. Die Techniken der lebenden freien radikalischen Polymerisation sind unter anderem die Nitroxid-vermittelte-Polymerisation (NMP), die Atom-Transfer-Radikalpolymerisation (ATRP) oder die Reversible Additions-Fragmentierungs Kettenübertragungs-Polymerisation (RAFT). Die lebende freie radikalische Polymerisation erfolgt im Wesentlichen unter Abwesenheit von irreversiblen Übertragungs- oder Abbruchreaktionen. Die Zahl der aktiven Kettenenden ist gering und bleibt während der Polymerisation im Wesentlichen konstant. Dies wird beispielsweise bei der RAFT-Polymerisation durch die Verwendung eines RAFT-Agens und einer nur geringen Menge an Initiator erreicht. Dadurch wird ein im Wesentlichen zeitgleiches und während des gesamten Polymerisationsprozesses anhaltendes Wachstum der Ketten ermöglicht. Dadurch ergibt sich die Möglichkeit, mit diesem Prozess Block- oder Gradienten- Copolymere herzustellen und es ergibt sich entsprechend eine enge Molekulargewichtsverteilung bzw. Polydispersität des Polymers. Dies ist bei der herkömmlichen "freien radikalischen Polymerisation" bzw. der nicht lebend durchgeführten freien radikalischen Polymerisation nicht möglich. Besonders vorteilhaft können nicht-statistische Copolymere der vorliegenden Erfindung mittels RAFT-Polymerisation hergestellt werden. Vorteilhafte RAFT-Agentien sind Dithioester, Dithiocarbamat, Trithiocarbonat oder Xanthat. Vorteilhafte Initiatoren sind Azobisisobutyronitril (AIBN), α,α'-Azodiisobutyramidine dihydrochloride (AAPH) oder Azo-bisisobutyramidin (AIBA).

Entsprechend einer besonders bevorzugten Ausführungsform wird die radikalische Polymerisation als Lösungspolymerisation, insbesondere in einem Lösemittel enthaltend Wasser, durchgeführt. Es ist ganz besonders bevorzugt, die Polymerisation in reinem Wasser durchzuführen. Es ist bevorzugt, die radikalische Polymerisation zur Herstellung von erfindungsgemässen Copolymeren **CP** bis zu einem Umsatz von mindestens 75%, bevorzugt mindestens 80 %, mehr bevorzugt mindestens 90%, ganz besonders bevorzugt mindestens 95%, im Speziellen mindestens 98% oder mehr, jeweils bezogen auf die gesamte Stoffmenge der vorhandenen Monomeren, zu fahren.

Erfindungsgemässe Copolymere **CP** können auch durch eine polymeranaloge Umsetzung hergestellt werden. Insbesondere können erfindungsgemässe Copolymere **CP** durch die Veresterung eines Homo- oder Copolymers umfassend Wiederholungseinheiten der allgemeine Struktur (I) mit Polyalkylenglykolen der allgemeinen Struktur (III) hergestellt werden

HO-R¹ (III),

wobei R¹ die oben angegeben Bedeutung hat.

Geeignete Verfahren zur Herstellung von erfindungsgemässen Copolymeren **CP** durch Veresterung sind dem Fachmann an sich bekannt und beispielsweise beschrieben in EP 1138697 (Sika AG).

In einer besonders bevorzugten Ausführungsform fällt das erfindungsgemässe Copolymer **CP** in einem Herstellungsverfahren durch polymeranaloge Veresterung als Schmelze an und wird in Schritt a) eines erfindungsgemässen Verfahrens zur Herstellung eines festen Dispergiermittels direkt als Schmelze eingesetzt.

Zusätzlich zu dem mindestens einen olefinisch ungesättigten Carbonsäure-Monomer der allgemeinen Struktur (la) und dem mindestens einen olefinisch ungesättigten Makromonomer der allgemeinen Struktur (IIa) können erfindungsgemässe Copolymere **CP** ein oder mehrere weitere Monomere **M** enthalten. Diese weiteren Monomere **M** können ausgewählt sein aus Styrol, Ethylen, Propylen, Butylen, Butadien, Isopren, Vinylacetat, Vinylchlorid, Acrylonitril, N-Vinylpyrrolidon und/oder Hydroxyalkyl(meth)acrylaten.

Es ist bevorzugt, dass der molare Anteil des einen oder der mehreren weiteren Monomeren **M** gleich oder kleiner 66 mol%, bevorzugt gleich oder kleiner 50 mol-%, mehr bevorzugt gleich oder kleiner 25 mol-%, besonders bevorzugt gleich oder kleiner 10 mol-%, insbesondere gleich oder kleiner 5 mol-%, jeweils bezogen auf alle das Copolymere **CP** aufbauenden Monomere, ist. In einer ganz besonders bevorzugten Ausführungsform ist das Copolymere **CP** im Wesentlichen frei von weiteren Monomereinheiten **M.** Demnach besteht ein erfindungsgemässes Copolymer **CP** zu mindestens 34 mol%, bevorzugt mindestens 50 mol%, mehr bevorzugt mindestens 75 mol%, besonders bevorzugt mindestens 90 mol%, insbesondere 100 mol% aus den Wiederholungseinheiten **A** und **B.**

In einer ganz besonders bevorzugten Ausführungsform besteht das Copolymere **CP** der vorliegenden Erfindung demnach aus
(i) Wiederholungseinheiten **A** der allgemeinen Struktur (I), 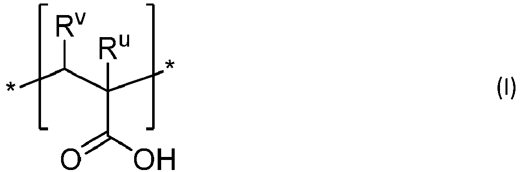 und
(ii) Wiederholungseinheiten **B** der allgemeinen Struktur (II), 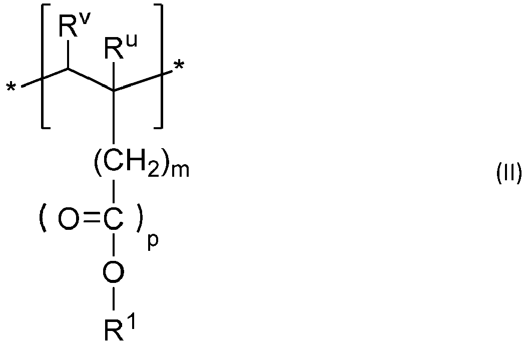 wobei
   jedes R^{u} unabhängig voneinander Wasserstoff oder eine Methylgruppe darstellt,
   jedes R^{v} unabhängig voneinander Wasserstoff oder COOM darstellt, wobei M unabhängig voneinander H, ein Alkalimetall, oder ein Erdalkalimetall ist,
   m = 0, 1, 2 oder 3 ist,
   p = 0 oder 1 ist,
   jedes R¹ unabhängig voneinander -[YO]ₙ-R⁴ darstellt, wobei Y ein C2- bis C4-Alkylen und R⁴ ein H, C1- bis C20-Alkyl, -Cyclohexyl oder -Alkylaryl darstellt, und n = 2 - 350 ist,
   und wobei die Wiederholungseinheiten **A** und **B** im Copolymer **CP** ein molares Verhältnis von **A** : **B** im Bereich von 10 : 90 - 90 :10 aufweisen.

Das erfindungsgemässe Dispergiermittel kann neben dem Copolymeren **CP** noch weitere Stoffe enthalten, ausgewählt aus der Gruppe umfassend Biozide, Antioxidantien und/oder Antibackmittel. Solche Stoffe können in einem erfindungsgemässen Dispergiermittel mit nicht mehr als 10 Gew.-%, bevorzugt nicht mehr als 5 Gew.-%,insbesondere nicht mehr als 1.5 Gew.-%, jeweils bezogen auf das gesamte Trockengewicht des Dispergiermittels, vorliegen. Diese Stoffe werden einem erfindungsgemässen Dispergiermittel insbesondere zur Verbesserung der Stabilität und/oder der Wirksamkeit zugegeben. Die Zugabe dieser Stoffe kann vor oder während der Herstellung eines Copolymeren **CP** erfolgen. Die Zugabe kann aber auch in jedem der Schritte a) - d) eines erfindungsgemässen Verfahrens erfolgen.

Beispiele für geeignete Antioxidantien sind beispielsweise in der WO 00/17263 beschrieben und umfassen alkylierte Phenole, alkylierte Hydrochinone und Alkylidenbisphenole. Beispiele für Antibackmittel sind Cellulose in Pulverform, Magnesiumstearat, Calciumcarbonat, Dolomit, Ton, Kaolin, Vermiculit, Bantonit, Talkum, Schlacke, Flugasche, Silikate oder Alumosilikate und Siliziumdioxid, insbesondere in Form von pyrogener Kieselsäure oder gefällter Kieselsäure.

In einer besonderen Ausführungsform bezieht sich die vorliegende Erfindung auf ein Verfahren zur Herstellung eines Dispergiermittels in fester Form, wobei das Dispergiermittel mindestens 90 Gew.-%, bevorzugt mindestens 95 Gew.-%, insbesondere mindestens 98.5 Gew.-%, jeweils bezogen auf das gesamte Trockengewicht des Dispergiermittels, eines Copolymeren **CP** umfasst.

In einer weiteren besonderen Ausführungsform bezieht sich die vorliegende Erfindung auf ein Verfahren zur Herstellung eines Dispergiermittels in fester Form, wobei das Dispergiermittel im Wesentlichen aus einem Copolymeren **CP** besteht.

Das erfindungsgemässe Verfahren zur Herstellung eines Dispergiermittels in fester Form umfasst die folgenden Schritte
a) Herstellung einer Mischung aus mindestens einem Copolymeren **CP,** mindestens einer Base und Wasser, wobei das Molverhältnis von Base zu Copolymer **CP** so gewählt ist, dass ein Neutralisationsgrad von mindestens 55%, bevorzugt mindestens 75%, mehr bevorzugt mindestens 95%, besonders bevorzugt mindestens 100%, insbesondere mindestens 110% resultiert
b) optional Trocknung der neutralisierten wässrigen Zubereitung aus Schritt a), und
c) optional Zerkleinerung des in Schritt b) erhaltenen Materials.

In einer bevorzugten Ausführungsform besteht das erfindungsgemässe Verfahren zur Herstellung eines Dispergiermittels in fester Form aus den Schritten
a) Herstellung einer Mischung aus mindestens einem Copolymeren **CP,** mindestens einer Base und Wasser, wobei das Molverhältnis von Base zu Copolymer **CP** so gewählt ist, dass ein Neutralisationsgrad von mindestens 55%, bevorzugt mindestens 75%, mehr bevorzugt mindestens 95%, besonders bevorzugt mindestens 100%, insbesondere mindestens 110% resultiert,
b) Trocknung der neutralisierten wässrigen Zubereitung aus Schritt a), und
c) optional Zerkleinerung des in Schritt b) erhaltenen Materials.

In einer ganz besonders bevorzugten Ausführungsform besteht das erfindungsgemässe Verfahren zur Herstellung eines Dispergiermittels in fester Form aus den Schritten
a) Herstellung einer Mischung aus einem Copolymeren **CP,** mindestens einer Base und Wasser, wobei das Molverhältnis von Base zu Copolymer **CP** so gewählt ist, dass ein Neutralisationsgrad von mindestens 55%, bevorzugt mindestens 75%, mehr bevorzugt mindestens 95%, besonders bevorzugt mindestens 100%, insbesondere mindestens 110% resultiert,
b) Trocknung der neutralisierten wässrigen Zubereitung aus Schritt a), und
c) Zerkleinerung des in Schritt b) erhaltenen Materials.

Es hat sich als besonders vorteilhaft herausgestellt, wenn der Anteil an Wasser in der Mischung des Schrittes a) 10-90 Gew.-%, bevorzugt 10-60 Gew.-%, besonders bevorzugt 10-40 Gew.-%, insbesondere 10 Gew.-%, jeweils bezogen auf das Gesamtgewicht der Mischung, beträgt. Bei einem Anteil von 5 Gew.-% Wasser ist die Neutralisation erschwert und es wird keine Zunahme des Schmelz- bzw. Erweichungspunktes erreicht.

In einer besonders bevorzugten Ausführungsform besteht die wässrige Zubereitung in Schritt a) somit zu 10-90 Gew.-%, bevorzugt 10-60 Gew.-%, besonders bevorzugt 10-40 Gew.-%, insbesondere 10 Gew.-%, jeweils bezogen auf das Gesamtgewicht der wässrigen Zubereitung, aus Wasser und zu dem zu 100 Gew.-% fehlenden Teil aus einem oder mehreren Copolymeren **CP** sowie mindestens einer Base.

Die Mischung in Schritt a) kann auf einem dem Fachmann an sich bekannte Art hergestellt werden. Insbesondere ist es möglich, das mindestens eine Copolymere CP vorzulegen und Wasser hinzuzufügen, so dass eine Lösung oder Dispersion des mindestens einen Copolymeren **CP** in Wasser entsteht. Das Copolymere **CP** kann dabei vorteilhaft als Schmelze vorgelegt werden. Zu dieser Lösung oder Dispersion wird dann die gewünschte Menge an Base hinzugefügt. Dabei kann die Base in Substanz, insbesondere in fester Form, als Lösung oder als Aufschlämmung vorliegen. Gemäss einer bevorzugten Ausführungsform wird die Base in fester Form zu der wässrigen Lösung oder Aufschlämmung des mindestens einen Copolymere **CP** gegeben.

Es ist aber auch möglich, die Base in Wasser aufzuschlämmen oder zu lösen. Diese wässrige Lösung oder Aufschlämmung der Base wird dann in einem erfindungsgemässen Verfahren zu dem mindestens einen Copolymeren **CP** zugegeben. Das mindestens eine Copolymere **CP** kann dabei in Substanz oder als Lösung bzw. Dispersion vorliegen. Wenn das mindestens eine Copolymere **CP** in Substanz vorliegt kann es vorteilhaft sein, das Copolymere **CP** als Schmelze vorzulegen und die Base anschliessend zu dieser Schmelze hinzuzugeben. Wenn das Copolymer **CP** als Lösung oder Dispersion vorliegt, handelt es sich insbesondere um eine Lösung oder Dispersion in Wasser.

In einer besonders vorteilhaften Ausführungsform des erfindungsgemässen Verfahrens wird zur Herstellung einer Mischung gemäss Schritt a) demnach folgendermassen vorgegangen:
(i) vorlegen mindestens eines Copolymeren **CP** als Schmelze,
(ii) auflösen oder aufschlämmen mindestens einer Base in Wasser,
(iii) hinzufügen der wässrigen Lösung oder Aufschlämmung der mindestens einen Base zu der Schmelze des Copolymeren **CP.**

Die Mischung aus Schritt a) enthält mindestens eine Base. Geeigneten Basen sind insbesondere Alkali- und Erdalkalimetalloxide, -hydroxide und
- (hydrogen)carbonate. Als besonders geeignet haben sich LiOH, NaOH, KOH, NaHCO₃, Li₂CO₃, Na₂CO₃, CaO, MgO, Ca(OH)₂, Mg(OH)₂, CaCO₃, MgCO₃, CaMg(CO₃)₂ sowie deren Mischungen herausgestellt. In einer besonders bevorzugten Ausführungsform ist die mindestens eine Base in Schritt a) ausgewählt aus der Gruppe der Erdalkalimetalloxide oder
- hydroxide, insbesondere CaO oder Ca(OH)₂.

Der Neutralisationsgrad entspricht vorliegend dem molaren Verhältnis von Hydroxid-Ionen, welche sich in wässrigem Milieu aus der mindestens einen Base bilden, zu den Carbonsäuregruppen -COOH der Copolymere **CP,** ausgedrückt in %. Ein Neutralisationsgrad von 55% bedeutet dementsprechend, dass das molare Verhältnis von gebildeten OH⁻-Ionen zu Carbonsäuregruppen 0.55 : 1 beträgt. Ein Neutralisationsgrad von 100% bedeutet, dass das molare Verhältnis von gebildeten OH⁻-Ionen zu Carbonsäuregruppen 1 : 1 beträgt. Ein Neutralisationsgrad von 110% bedeutet, dass das molare Verhältnis von gebildeten OH⁻-Ionen zu Carbonsäuregruppen 1.1 : 1 beträgt. In letzterem Fall liegt also ein stöchiometrischer Überschuss an OH⁻-Ionen vor. Der Neutralisationsgrad lässt sich vorliegend insbesondere berechnen unter der Annahme, dass die verwendete Base in wässrigem Milieu vollständig dissoziiert und stöchiometrisch OH⁻-Ionen bildet.

Es hat sich herausgestellt, dass ein Neutralisationsgrad von mindestens 55%, bevorzugt mindestens 75%, mehr bevorzugt mindestens 95%, besonders bevorzugt mindestens 100%, insbesondere mindestens 110%, vorteilhaft ist, da dadurch feste Dispergiermittel mit besonders hohen Schmelzpunkten, bzw. Erweichungspunkten, herstellbar sind. Ein Neutralisationsgrad von grösser als 150% ist aber im Allgemeinen nicht weiter vorteilhaft.

Bevorzugt erfolgt die Neutralisation bei einer Temperatur von 20 - 80°C und Normaldruck unter ständigem Rühren.

Die Trocknung der neutralisierten wässrigen Zubereitung kann in einer Weise erfolgen, die dem Fachmann an sich bekannt ist, wie beispielsweise in einem Trommeltrockner oder in einem Bandtrockner. Es ist jedoch bevorzugt, die neutralisierte wässrige Zubereitung nicht in einem Verfahren der Sprühtrocknung zu trocknen, da in solchen Verfahren, wie bereits erwähnt, die Temperaturbelastung der polymeren Dispergiermittel sehr hoch ist und zudem ein erhöhtes Risiko von Staubexplosionen besteht.

Das erfindungsgemässe Verfahren umfasst insbesondere dann einen Schritt zur Trocknung der in Schritt a) erhaltenen neutralisierten Mischung, wenn der Gehalt an Wasser in der Mischung grösser oder gleich 13 Gew.-%, insbesondere grösser oder gleich 15 Gew.-%, jeweils bezogen auf das Gesamtgewicht der Mischung, beträgt. Bei einem Anteil von kleiner 13 Gew.-%, insbesondere einem Anteil von 10 Gew.-% von Wasser in der Gesamtmischung erstarren neutralisierte Copolymere **CP** auch ohne Trocknung zu einem festen Dispergiermittel. Es ist aber allgemein bevorzugt, wenn das erfindungsgemässe Verfahren einen Schritt b) zur Trocknung umfasst.

In einer bevorzugten Ausführungsform wird die neutralisierte wässrige Zubereitung in Schritt b) bei einer Temperatur von 20 - 180°C getrocknet. Der Druck kann dabei Normaldruck betragen. Es ist aber auch möglich, bei verringertem Druck zu trockenen, beispielsweise bei einem Druck von 900 mbar oder tiefer, bevorzugt bei 500 mbar oder tiefer. Ein tieferer Druck ermöglicht einen schnelleren Trocknungsvorgang und/oder die Verringerung der Trocknungstemperatur. Ein schneller Trocknungsvorgang führt zu einem festen Dispergiermittel, welches eine verringerte Klebrigkeit aufweist. Es ist daher besonders bevorzugt, den Trocknungsvorgang bei 20 - 180°C, einem Druck von maximal 100mbar durchzuführen. Das getrocknete Dispergiermittel hat eine Restfeuchte von < 5%, bevorzugt < 4%, jeweils bezogen auf das Gesamtgewicht des getrockneten Dispergiermittels.

Die Zerkleinerung des getrockneten Dispergiermittels kann insbesondere durch Brechen und/oder Mahlen erfolgen. Geeignete Mühlen sind beispielsweise Hammermühlen, Kolloidmühlen, Korundmühlen, Kugelmühlen, Planetenmühlen, Prallmühlen, Rohrmühlen, Rotormühlen, Scheibenmühlen, Schneidmühlen, Schwingmühlen, Strahlmühlen, Stiftmühlen, Trommelmühlen, Vertikalmühlen, Wirbelstrommühlen, oder Walzenstühle. Es kann besonders günstig sein, eine Zerkleinerung in einer Kryogenvermahlung durchzuführen. Die Zerkleinerung, insbesondere das Mahlen, kann daher bei Temperaturen zwischen -196°C und +80°C erfolgen.

Das Dispergiermittel in fester Form wird erhalten mit einer Partikelgrößenverteilung mit D90-Wert von < 300 µm, vorzugsweise < 270 µm, insbesondere < 255 µm, einem D10-Wert von < 60 µm, vorzugsweise < 50 µm, insbesondere < 45 µm, und einem D50-Wert zwischen 70-130 µm, vorzugsweise 75 - 120 µm, insbesondere 80 - 110 µm.

In einem weiteren Aspekt bezieht sich die vorliegende Erfindung auf ein festes Dispergiermittel erhältlich nach einem Verfahren wie oben beschrieben.

In einem weiteren Aspekt bezieht sich die vorliegende Erfindung auf die Verwendung eines festen Dispergiermittels, welches nach einem Verfahren wie vorstehend beschrieben erhalten wurde, in einer mineralischen Bindemittelzusammensetzung.

Unter dem Ausdruck "mineralisches Bindemittel" ist vorliegend ein Bindemittel zu verstehen, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (Gips oder Weisskalk) sein.

Eine mineralische Bindemittelzusammensetzung ist dementsprechend eine Zusammensetzung umfassend mindestens ein mineralisches Bindemittel. Eine mineralische Bindemittelzusammensetzung kann beispielsweise ein Trockenmörtel sein. Eine mineralische Bindemittelzusammensetzung kann auch ein mit Wasser angemachter Mörtel oder Beton sein. Eine mineralische Bindemittelzusammensetzung kann auch eine Gipsmischung sein.

Insbesondere kann das mineralische Bindemittel ein hydraulisches Bindemittel enthalten, bevorzugt Zement. Besonders bevorzugt ist ein Zement mit einem Zementklinkeranteil von ≥ 35 Gew.-%. Insbesondere ist der Zement ein Portlandzement vom Typ CEM I, CEM II, CEM III, CEM IV oder CEM V gemäss Norm EN 197-1, ein Aluminatzement, insbesondere ein Tonerdezement nach DIN EN 14647, ein Calciumsulfoaluminatzement oder Mischungen der genannten Zemente.

Gemäss einer besonderen Ausführungsform besteht das mineralische Bindemittel im Wesentlichen aus Portlandzement.

Gemäss einer weiteren besonderen Ausführungsform besteht das mineralische Bindemittel im Wesentlichen aus einer Mischung aus Portlandzement und Aluminatzement oder Portlandzement und Calciumsulfoaluminatzement, wobei ein Gewichtsverhältnis von Portlandzement zu Aluminatzement bzw. Portlandzement zu Calciumsulfoaluminatzement im Bereich von 10:1 bis 1:10 liegt.

Die mineralische Bindemittelzusammensetzung umfasst bevorzugt mindestens ein hydraulisches Bindemittel, insbesondere mindestens einen Zement, in wenigstens 5 Gew.-%, bevorzugt in wenigstens 20 Gew.-%, besonders bevorzugt in wenigstens 35 Gew.-%, ganz besonders bevorzugt in wenigstens 65 Gew.-%, im Speziellen ≥ 95 Gew.-%, jeweils bezogen auf die Trockenmasse der mineralischen Bindemittelzusammensetzung.

Es kann aber auch vorteilhaft sein, wenn das mineralische Bindemittel oder die mineralische Bindemittelzusammensetzung andere Bindemittel enthält oder im Wesentlichen daraus besteht. Dies sind insbesondere latent hydraulische Bindemittel und/oder puzzolanische Bindemittel. Geeignete latent hydraulische und/oder puzzolanische Bindemittel sind z.B. Schlacke, Flugasche, Silicastaub, Mikrosilika, Metakaolin, Tuff, Trass, Vulkansche, Zeolithe, und/oder gebrannten Ölschiefer.

In einer Ausführungsform enthält das mineralische Bindemittel 5 - 95 Gew.-%, insbesondere 5 - 65 Gew.-%, besonders bevorzugt 15 - 35 Gew.-%, jeweils bezogen auf die gesamte Trockenmasse des mineralischen Bindemittels, latent hydraulische und/oder puzzolanische Bindemittel. Vorteilhafte latent hydraulische und/oder puzzolanische Bindemittel sind Schlacke und/oder Flugasche.

In einer besonderen Ausführungsform enthält das mineralische Bindemittel ein hydraulisches Bindemittel, insbesondere Zement, und ein latent hydraulisches und/oder puzzolanisches Bindemittel, bevorzugt Schlacke und/oder Flugasche. Der Anteil des latent hydraulischen und/oder puzzolanischen Bindemittels beträgt dabei besonders bevorzugt 5 - 65 Gew.-%, besonders bevorzugt 15 - 35 Gew.-%, während wenigstens 35 Gew.-%, im Speziellen wenigstens 65 Gew.-%, jeweils bezogen auf die gesamte Trockenmasse des mineralischen Bindemittels.

In einer weiteren Ausführungsform kann das mineralische Bindemittel Calciumsulfat-Dihydrat, α-Calciumsulfat-Hemihydrat, β-Calciumsulfat-Hemihydrat, Anhydrit und/oder Kalk umfassen oder im Wesentlichen daraus bestehen.

In einer besonderen Ausführungsform ist das mineralische Bindemittel ein ternäres Bindemittel. In dieser Ausführungsform besteht das mineralische Bindemittel im Wesentlichen aus (i) Portlandzement, (ii) Aluminatzement oder Calciumsulfoaluimnatzement und (iii) einem oder mehreren Calciumsulfatträger ausgewählt aus der Gruppe bestehend aus Calciumsulfat-Dihydrat, α-Calciumsulfat-Hemihydrat, β-Calciumsulfat-Hemihydrat und Anhydrit. Die Gewichtsverhältnisse der drei Komponenten können dabei in weiten Bereichen variieren.

Gemäss bevorzugter Ausführungsformen ist das mineralische Bindemittel demnach ausgewählt aus der Gruppe umfassend Zement, insbesondere Portlandzement, Aluminatzement und Calciumsulfoaluminatzement, Calciumsulfat-Dihydrat, α-Calciumsulfat-Hemihydrat, β-Calciumsulfat-Hemihydrat, Anhydrit, Kalk, industrielle und synthetische Schlacken, insbesondere Hochofenschlacken, Hüttensand, Hüttensandmehl, elektrothermische Phosphorschlacke, Kupferschlacke und Edelstahlschlacke, Puzzolane, insbesondere Flugaschen, Mikrosilika, Metakaolin, natürlich Puzzolane, insbesondere Tuff, Trass und Vulkansche, natürliche und synthetische Zeolithe, gebrannten Ölschiefer oder Mischungen davon.

Gemäss einer bevorzugten Ausführungsform ist das mineralische Bindemittel ein Bindemittel basierend auf Calciumsulfat und ist ausgewählt aus der Gruppe umfassend α-Calciumsulfat-Hemihydrat, β-Calciumsulfat-Hemihydrat, Anhydrit und Mischungen davon. Vorteilhafterweise beträgt der Anteil an Calciumsulfat-Hemihydrat im gesamten mineralischen Bindemittel mindestens 80 Gew.-%, bevorzugt mindestens 90 Gew.-%, besonders bevorzugt mindestens 95 Gew.-%, jeweils bezogen auf das Gesamtgewicht des mineralischen Bindemittels. Mineralische Bindemittel auf Basis von Calciumsulfat können sowohl auf REA-Gips, Phospho-Gips, als auch auf Naturgips basieren. Sie werden insbesondere in Pulverform eingesetzt. Die Partikelgrößenverteilung der Calciumsulfat-basierten Bindemittel kann z.B. durch Laserbeugung nach ISO 13320:2009 bestimmt werden, wie weiter oben beschreiben. Die mittlere Partikelgrösse D50 erfindungsgemässer mineralischer Bindemittel auf Basis von Cacliumsulfat liegt vorzugsweise unter 100 µm, bevorzugt unter 60 µm, und über 0.5 µm, also beispielsweise in einem Bereich von 5 µm bis 50 µm. Geeignete mineralische Bindemittel auf Basis von Calciumsulfat sind beispielsweise unter dem Handelsnamen Hartformgips von der Saint-Gobain Formula GmbH, unter dem Handelsnamen Alpha-Halbhydrat von der Firma Knauf oder unter dem Handelsnamen Raddichem von der Firma Casea erhältlich.

Mineralische Bindemittel im Sinne der vorliegenden Erfindung können aber auch Mischungen aus Calciumsulfat-basierten Bindemitteln und mindestens einem Zement, wie weiter oben definiert, sein. Solche Mischungen haben den Vorteil, dass sie die Eigenschaften einer schnellen Festigkeitsentwicklung mit geringem Schrumpfen verbinden.

Ebenso kann die mineralische Bindemittelzusammensetzung Zuschlagstoffe wie z.B. Kalkstein, Quarzmehle, Sande, Kies und/oder Pigmente enthalten.

In einem weiteren Aspekt bezieht sich diese Erfindung auf mineralische Bindemittel oder mineralische Bindemittelzusammensetzungen, insbesondere Trockenmörtel, die mindestens ein pulverförmiges Dispergiermittel, hergestellt in einem erfindungsgemässen Verfahren, enthalten. Gegenstand der vorliegenden Erfindung ist daher eine mineralische Bindemittelzusammensetzung umfassend
a) 5 - 60 Gew.-%, bevorzugt 10 - 45 Gew.-%, besonders bevorzugt 12 - 30 Gew.-% eines oder mehreren mineralischen Bindemittel ausgewählt aus der Gruppe bestehend aus Portlandzement, Aluminatzement, Calciumsulfoaluminatzement, Calciumsulfat-Dihydrat, α-Calciumsulfat-Hemihydrat, β-Calciumsulfat-Hemihydrat, Anhydrit, Kalk, Schlacke, Flugasche, Mikrosilika, Metakaolin, Tuff, Trass, Vulkanasche und gebrannten Ölschiefer,
b) 0.01 - 10 Gew.-%, bevorzugt 0.05 - 5 Gew.-%, besonders bevorzugte 0.1 - 2 Gew.-%, insbesondere 0.15 - 0.8 Gew.-% mindestens eines festen Dispergiermittels erhältlich nach einem Verfahren wie oben beschrieben,
c) 30 - 90 Gew.-%, bevorzugt 40 - 80 Gew.-%, insbesondere 40 - 75 Gew.-% mindestens eines Zuschlagstoffes ausgewählt aus der Gruppe bestehend aus Kalkstein, Quarzmehl, Sand, Kies und Pigmente.

Die mineralische Bindemittelzusammensetzung kann in Form einer trockenen, pulverförmigen Zusammensetzung oder in Form einer flüssigen oder pastösen Zusammensetzung vorliegen, wobei flüssige oder pastöse Bindemittelzusammensetzungen einen entsprechenden Anteil an Wasser enthalten. Die mineralische Bindemittelzusammensetzung kann auch die Form einer vollständig ausgehärteten mineralischen Bindemittelzusammensetzung - zum Beispiel eines Formkörpers - haben.

Vorteilhafterweise ist die Menge an Wasser in einer trockenen mineralischen Bindemittelzusammensetzung < 5 Gew.-%, bevorzugt < 1 Gew.-%, insbesondere < 0.3 Gew.-%, jeweils bezogen auf das Gesamtgewicht der trockenen mineralischen Bindemittelzusammensetzung. Vorteilhafterweise liegt das Gewichtsverhältnis von Wasser zu mineralischem Bindemittel in einer pastösen mineralischen Bindemittelzusammensetzung im Bereich von 0.2 - 0.8, bevorzugt 0.25 - 0.6, insbesondere 0.3 - 0.5.

Schliesslich bezieht sich diese Erfindung auf Gipsmischungen, die mindestens ein pulverförmiges Dispergiermittel, hergestellt in einem erfindungsgemässen Verfahren, enthalten. Gegenstand der vorliegenden Erfindung ist daher auch eine mineralische Bindemittelzusammensetzung umfassend
a) 30 - 99.9 Gew.-%, bevorzugt 50 - 99 Gew.-%, insbesondere 60 - 95 Gew.-% eines oder mehreren mineralischen Bindemittel ausgewählt aus der Gruppe bestehend aus Calciumsulfat-Dihydrat, α-Calciumsulfat-Hemihydrat, β-Calciumsulfat-Hemihydrat und Anhydrit,
b) 0.01 - 10 Gew.-%, bevorzugt 0.05 - 5 Gew.-%, besonders bevorzugte 0.1 - 2 Gew.-%, insbesondere 0.15 - 0.8 Gew.-% mindestens eines festen Dispergiermittels erhältlich nach einem Verfahren wie oben beschrieben,
c) optional 0.5 - 25 Gew.-%, bevorzugt 1 - 15 Gew.-%, insbesondere 1 - 5 Gew.-% eines oder mehreren mineralischen Bindemittel ausgewählt aus der Gruppe bestehend aus Portlandzement, Aluminatzement, Calciumsulfoaluminatzement, Kalk, Schlacke, Flugasche, Mikrosilika, Metakaolin, Tuff, Trass, Vulkanasche und gebrannten Ölschiefer,
d) optional Zuschlagstoffe ausgewählt aus der Gruppe bestehend aus Kalkstein, Quarzmehl, Sand, Kies und Pigmenten.

Weitere Ausführungsformen werden in den nachfolgenden Beispielen beschrieben. Diese sollen als erläuternd, aber nicht als einschränkend für die vorliegende Erfindung gelten.

### Beispiele

### Beispiel 1 - Herstellung von festen Dispergiermitteln

Ein Copolymer CP mit einem Rückgrat aus Acrylsäure und Methacrylsäure (Molverhältnis 1:1, Mn des Rückgrates: 6'000 g/mol) und Methoxy-terminierten Polyethylenglykol-Seitenketten (Mn der Seitenkette: 5'000 g/mol) mit einem molaren Verhältnis von Säure zu Seitenkette von 12:1 wurde auf 90°C erwärmt. Zu der erhaltenen Schmelze des Copolymeren **CP** wurde eine Aufschlämmung von Ca(OH)₂ in Wasser zugegeben.

Zur Herstellung der Beispiele 1-4 wurde die jeweilige in der Tabelle 1 angegebene Menge Ca(OH)₂ in der jeweiligen angegebenen Menge Wasser aufgeschlämmt und zum Copolymeren **CP** zugegeben.

Die erhaltenen Mischungen wurden bei 20°C für 2 min auf einem

Hochgeschwindigkeitsrührer gerührt, anschliessend in einem Ofen bei 60°C bis zu einer Restfeuchte von < 5% getrocknet und dann zermahlen. Es wurden erfindungsgemässe pulverförmige Dispergiermittel (Beispiele1 - 4) mit den in Tabelle 1 angegebenen Neutralisationsgraden und Restfeuchten erhalten.

Referenz 1, welche nicht erfindungsgemäss ist, wurde wie vorgehend beschrieben hergestellt. Allerdings wurde Ca(OH)₂ direkt, ohne Aufschlämmung in Wasser, zu einer Schmelze des Copolymer **CP** gegeben. Nach erkalten und zermahlen der Schmelze erhielt man Referenz 1.

**Tabelle 1: Herstellung der Polymerpulver 1 - 4**

| Beispiel | Ca(OH)₂ [mg/g Polymer] | H₂O [mg/g Polymer] | H₂O [Gew.-%]* | Neutralisationsgrad | Restfeuchte |
|---|---|---|---|---|---|
| Referenz 1 | 80 | 0 | 0 | 110 | n.b. |
| 1 | 80 | 120 | 10 | 110 | 3.8 |
| 2 | 80 | 462 | 30 | 110 | 3.3 |
| 3 | 69 | 119 | 10 | 95 | n.b. |
| 4 | 40 | 116 | 10 | 55 | n.b. |

| | | | | | |
|---|---|---|---|---|---|
| * bezogen auf die Gesamtmasse der Mischung n.b.: nicht bestimmt | | | | | |

### Beispiel 2 - Bestimmung von Schmelzpunkten bzw. Erweichungspunkten

Schmelzpunkte bzw. Erweichungspunkte, wurden mittels eines Gerätes Schmelzpunkt M-560 der Firma Büchi AG gemessen (Messbereich: 50-400°C, Aufheizrate: 20°C/min, Gerät kalibriert gegen 4-Nitrotoluol, Diphenylessigsäure, Koffein und Kaliumnitrat).

Die erfindungsgemässen Polymerpulver 1 - 4 zeigten kein Schmelzen, sondern erweichen, gefolgt von Zersetzung. Die folgende Tabelle 2 zeigt die Ergebnisse der Messung.

Die nicht-erfindungsgemässe Referenz 2 entspricht der Referenz 1, mit dem Unterschied, dass der Referenz 2 kein Ca(OH)₂ zugesetzt wurde.

**Tabelle 2: Schmelz- bzw. Erweichungspunkte und Zersetzungspunkte der Polymerpulver**

| **Beispiel** | **Schmelzpunkt bzw. Erweichungspunkt [°C]** | **Zersetzungspunkt [°C]** |
|---|---|---|
| Referenz 1 | 60 | n.b. |
| Referenz 2 | 60 | n.b. |
| 1 | 261 | 311 |
| 2 | n.b. | n.b. |
| 3 | 225 | 282 |
| 4 | 176 | 279 |

| | | |
|---|---|---|
| n.b.: nicht bestimmt | | |

Es zeigt sich, dass mit zunehmendem Neutralisationsgrad höhere Schmelzpunkte erreicht werden. Anhand von Referenz 1 wird deutlich, dass eine Erhöhung des Schmelzpunktes durch Neutralisation direkt in der Schmelze nicht möglich ist. Die nicht neutralisierte Referenz 2 zeigt einen tiefen Schmelzpunkt.

### Beispiel 3 - Prüfung der Polymerpulver in Gipsmischungen

Es wurden 0.4 g je eines der erfindungsgemässen Polymerpulver 1 - 4, bzw. die nicht-erfindungsgemässe Referenzprobe 2, in 106 g Wasser gelöst. Dazu wurden 200 g Calciumsulfat-ß-Halbhydrat sowie 0.2 g Calciumsulfat-Dihydrat gegeben und die entstandene Aufschlämmung wurde 15 Sekunden ruhen gelassen. Anschliessend wurde 30 Sekunden intensiv von Hand gerührt.

Die entstandene Aufschlämmung wurde in einen Minikonus mit einem Durchmesser von 50 mm und einer Höhe von 51 mm gefüllt und 75 Sekunden ruhen gelassen. Dann wurde das Ausbreitmass (ABM) in Millimeter bestimmt. Dazu wurde der Minikonus angehoben und der Durchmesser des sich bildenden Gipskuchens gemessen, sobald kein Fliessen mehr beobachtet wurde. Die Zeitspanne zwischen Abschluss des Mischvorgangs und Anheben des Minikonus betrug 2 Minuten. Der Durchmesser in mm wird als Ausbreitmass bezeichnet.

Der Versteifungsbeginn und das Versteifungsende wurde mit der Messerschnittmethode nach DIN EN 13279-2:2014-03 und der Daumendruckmethode bestimmt. Der Versteifungsbeginn (VB) ist erreicht, wenn nach einem Messerschnitt durch den Gips-Kuchen die Schnittränder nicht mehr zusammenlaufen. Das Versteifungsende ist eingetreten (VE), wenn bei einem Fingerdruck mit einem Druckaufwand von ca. 5 kg kein Wasser mehr aus dem Gips-Kuchen austritt. Alternativ können Versteifungsbeginn und Versteifungsende gemäss DIN EN 13279-2:2014-03 auch mit dem Vicat-Nadelgerät bestimmt werden.

Die folgende Tabelle 3 gibt einen Überblick der Ergebnisse. Das nicht erfindungsgemässe Beispiel Referenz 3 ist eine Gipsmischung ohne den Zusatz von Polymerpulver. Referenz 3 wurde wie oben beschrieben aus 200 g Calciumsulfat-ß-Halbhydrat, 0.2 g Calciumsulfat-Dihydrat und 106 g Wasser hergestellt, ohne den Zusatz eines Polymerpulvers.

**Tabelle 3: Ergebnisse der Gipsmischungen**

| **Beispiel** | **Ausbreitmass [mm]** | **VB [min]** | **VE [min]** |
|---|---|---|---|
| Referenz 3 | 140 | 3.00 | 8.00 |
| Referenz 2 | 184 | 4.00 | 10.00 |
| 1 | 188 | 3.66 | 9.75 |
| 2 | 188 | 3.58 | 9.92 |
| 3 | 175 | 3.50 | 9.33 |
| 4 | 167 | 3.42 | 9.25 |

Es zeigt sich, dass erfindungsgemässe Dispergiermittel mit zunehmendem Neutralisationsgrad ein verbessertes Ausbreitmass bewirken. Bei einem Neutralisationsgrad von 110% (Beispiele 1 und 2) entspricht die verflüssigende Wirkung in etwa derjenigen der nicht-neutralisierten Referenz 2.

Es zeigt sich weiterhin, dass bei niedrigen Neutralisationsgraden zunächst eine weniger starke verzögernde Wirkung eintritt, als bei Zugabe eines nicht-neutralisierten Polymerpulvers, welche aber mit zunehmendem Neutralisationsgrad wieder zunimmt.

## Patentansprüche

1. Verfahren zur Herstellung eines Dispergiermittels in fester Form, wobei das Dispergiermittel mindestens 90 Gew.-%, bevorzugt mindestens 95 Gew.-%, insbesondere mindestens 98.5 Gew.-%, jeweils bezogen auf das gesamte Trockengewicht des Dispergiermittels, mindestens eines Copolymeren CP umfasst, wobei Copolymere CP folgende Bestandteile umfassen:
(i) Wiederholungseinheiten A der allgemeinen Struktur (I), 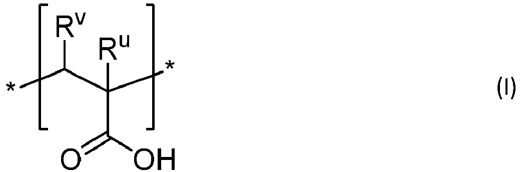 und
(ii) Wiederholungseinheiten B der allgemeinen Struktur (II), 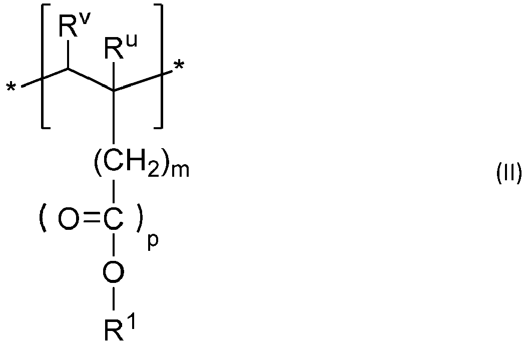 wobei
jedes R^{u} unabhängig voneinander Wasserstoff oder eine Methylgruppe darstellt,
jedes R^{v} unabhängig voneinander Wasserstoff oder COOM darstellt, wobei M unabhängig voneinander H, ein Alkalimetall, oder ein Erdalkalimetall ist,
m = 0, 1, 2 oder 3 ist,
p = 0 oder 1 ist,
jedes R¹ unabhängig voneinander -[YO]ₙ-R⁴ darstellt, wobei Y ein C2- bis C4-Alkylen und R⁴ ein H, C1- bis C20-Alkyl, -Cyclohexyl oder -Alkylaryl darstellt, und n = 2 - 350 ist, und
die Wiederholungseinheiten **A** und **B** im Copolymer **CP** ein molares Verhältnis von **A** : B im Bereich von 10 : 90 - 90 :10 aufweisen,
**dadurch gekennzeichnet, dass** das Verfahren die folgenden Schritte umfasst:
a) Herstellung einer Mischung aus mindestens einem Copolymeren **CP,** mindestens einer Base und Wasser, wobei das Molverhältnis von Base zu Copolymer **CP** so gewählt ist, dass ein Neutralisationsgrad von mindestens 55%, bevorzugt mindestens 75%, mehr bevorzugt mindestens 95%, besonders bevorzugt mindestens 100%, insbesondere mindestens 110% resultiert,
b) optional Trocknung der neutralisierten wässrigen Zubereitung aus Schritt a), und
c) optional Zerkleinerung des in Schritt b) erhaltenen Materials.

2. Verfahren zur Herstellung eines Dispergiermittels in fester Form, wobei das Dispergiermittel mindestens 90 Gew.-%, bevorzugt mindestens 95 Gew.-%, insbesondere mindestens 98.5 Gew.-%, jeweils bezogen auf das gesamte Trockengewicht des Dispergiermittels, eines Copolymeren **CP** umfasst, wobei das Copolymere CP folgende Bestandteile umfasst:
(i) Wiederholungseinheiten A der allgemeinen Struktur (I), 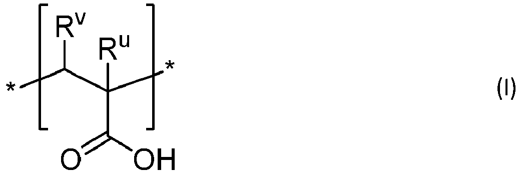 und
(ii) Wiederholungseinheiten **B** der allgemeinen Struktur (II), 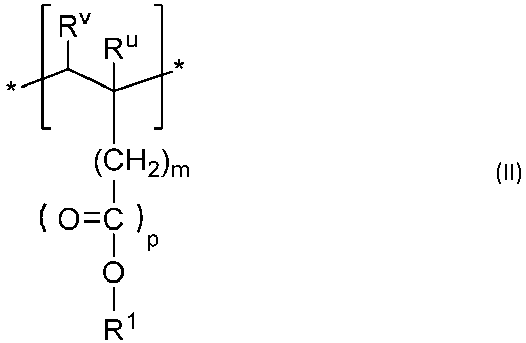
wobei Ru, Rv, m, p und R1 sowie ein molares Verhältnis von **A** : **B** wie in Anspruch 1 definiert sind,
**dadurch gekennzeichnet, dass** das Verfahren aus den folgenden Schritten besteht:
a) Herstellung einer Mischung aus einem Copolymeren **CP,** mindestens einer Base und Wasser, wobei das Molverhältnis von Base zu Copolymer **CP** so gewählt ist, dass ein Neutralisationsgrad von mindestens 55%, bevorzugt mindestens 75%, mehr bevorzugt mindestens 95%, besonders bevorzugt mindestens 100%, insbesondere mindestens 110% resultiert,
b) Trocknung der neutralisierten wässrigen Zubereitung aus Schritt a), und
c) Zerkleinerung des in Schritt b) erhaltenen Materials.

3. Verfahren nach Anspruch 1 oder 2, **dadurch gekennzeichnet, dass** das eine oder die mehreren Copolymere **CP** zu mindestens 34 mol%, bevorzugt mindestens 50 mol%, mehr bevorzugt mindestens 75 mol%, besonders bevorzugt mindestens 90 mol%, insbesondere 100 mol% aus den Wiederholungseinheiten **A** und **B** bestehen.

4. Verfahren gemäss wenigstens einem der vorhergehenden Ansprüche, **dadurch gekennzeichnet, dass** der Anteil an Wasser in der Mischung des Schrittes a) 10-90 Gew.-%, bevorzugt 10-60 Gew.-%, besonders bevorzugt 10-40 Gew.-%, insbesondere 10 Gew.-%, jeweils bezogen auf das Gesamtgewicht der Mischung, beträgt.

5. Verfahren gemäss wenigstens einem der vorhergehenden Ansprüche, **dadurch gekennzeichnet, dass** die Base ausgewählt ist aus der Gruppe der Alkalimetall- und Erdalkalimetall-oxide, -hydroxide, -hydrogencarbonate und/der -carbonate, insbesondere aus der Gruppe bestehend aus LiOH, NaOH, KOH, NaHCO₃, Li₂CO₃, Na₂CO₃, CaO, MgO, Ca(OH)₂, Mg(OH)₂, CaCO₃, MgCO₃, CaMg(CO₃)₂ oder Mischungen daraus.

6. Verfahren gemäss wenigstens einem der vorhergehenden Ansprüche, **dadurch gekennzeichnet, dass** die neutralisierte wässrige Zubereitung in Schritt b) bei einer Temperatur von 20 - 180 °C getrocknet wird.

7. Verfahren gemäss wenigstens einem der vorhergehenden Ansprüche, **dadurch gekennzeichnet, dass** die neutralisierte wässrige Zubereitung in Schritt b) bei Normaldruck getrocknet wird.

8. Verfahren gemäss wenigstens einem der Ansprüche 1 - 6, **dadurch gekennzeichnet, dass** die neutralisierte wässrige Zubereitung in Schritt b) bei einem Druck von 900 mbar oder tiefer, bevorzugt bei 500 mbar oder tiefer getrocknet wird.

9. Verfahren gemäss wenigstens einem der vorhergehenden Ansprüche, **dadurch gekennzeichnet, dass** das feste Dispergiermittel ein Pulver ist.

10. Verfahren gemäss wenigstens einem der vorhergehenden Ansprüche, **dadurch gekennzeichnet, dass** das feste Dispergiermittel eine Partikelgrößenverteilung mit einem D90-Wert von < 300 µm, vorzugsweise < 270 µm, insbesondere < 255 µm, einem D10-Wert von < 60 µm, vorzugsweise < 50 µm, insbesondere < 45 µm, und einem D50-Wert zwischen 70 - 130 µm, vorzugsweise 75 - 120 µm, insbesondere 80 - 110 µm aufweist.

11. Verfahren gemäss wenigstens einem der vorhergehenden Ansprüche, **dadurch gekennzeichnet, dass** das feste Dispergiermittel noch weitere Stoffe ausgewählt aus der Gruppe umfassend Biozide, Antioxidantien und/oder Antibackmittel enthält.

12. Festes Dispergiermittel, erhältlich nach einem Verfahren nach mindestens einem der Ansprüche 1 - 11.

13. Verwendung eines festen Dispergiermittels nach Anspruch 12 in einer mineralischen Bindemittelzusammensetzung.

14. Mineralische Bindemittelzusammensetzung umfassend
a) 5 - 60 Gew.-%, bevorzugt 10 - 45 Gew.-%, besonders bevorzugt 12 - 30 Gew.-% eines oder mehreren mineralischen Bindemittel ausgewählt aus der Gruppe bestehend aus Portlandzement, Aluminatzement, Calciumsulfoaluminatzement, Calciumsulfat-Dihydrat, α-Calciumsulfat-Hemihydrat, β-Calciumsulfat-Hemihydrat, Anhydrit, Kalk, Schlacke, Flugasche, Mikrosilika, Metakaolin, Tuff, Trass, Vulkanasche und gebrannten Ölschiefer,
b) 0.01 - 10 Gew.-%, bevorzugt 0.05 - 5 Gew.-%, besonders bevorzugt 0.1 - 2 Gew.-%, insbesondere 0.15 - 0.8 Gew.-% mindestens eines festen Dispergiermittels gemäss Anspruch 12,
c) 30 - 90 Gew.-%, bevorzugt 40 - 80 Gew.-%, insbesondere 40 - 75 Gew.-% mindestens eines Zuschlagstoffes ausgewählt aus der Gruppe bestehend aus Kalkstein, Quarzmehl, Sand, Kies und Pigmenten.

15. Mineralische Bindemittelzusammensetzung umfassend
a) 30 - 99.9 Gew.-%, bevorzugt 50 - 99 Gew.-%, insbesondere 60 - 95 Gew.-% eines oder mehreren mineralischen Bindemittel ausgewählt aus der Gruppe bestehend aus Calciumsulfat-Dihydrat, α-Calciumsulfat-Hemihydrat, β-Calciumsulfat-Hemihydrat und Anhydrit,
b) 0.01 - 10 Gew.-%, bevorzugt 0.05 - 5 Gew.-%, besonders bevorzugt 0.1 - 2 Gew.-%, insbesondere 0.15 - 0.8 Gew.-% mindestens eines festen Dispergiermittels gemäss Anspruch 12,
c) optional 0.5 - 25 Gew.-%, bevorzugt 1 - 15 Gew.-%, insbesondere 1 - 5 Gew.-% eines oder mehreren mineralischen Bindemittel ausgewählt aus der Gruppe bestehend aus Portlandzement, Aluminatzement, Calciumsulfoaluminatzement, Kalk, Schlacke, Flugasche, Mikrosilika, Metakaolin, Tuff, Trass, Vulkanasche und gebrannten Ölschiefer,
d) optional Zuschlagstoffe ausgewählt aus der Gruppe bestehend aus Kalkstein, Quarzmehl, Sand, Kies und Pigmenten.
